# EUROPEAN PATENT SPECIFICATION

(11) **EP 2 772 465 B1**
(45) Date of publication and mention of the grant of the patent: **24.01.2018**
(21) Application number: 12842947.9
(22) Date of filing: 23.10.2012
(51) Int. Cl.: C01B 3/38, H01M 8/06, H01M 8/10, H01M 8/12, B01J 8/04, B01J 8/00, C10G 45/08

(54) **HYDRODESULFURIZATION DEVICE, HYDROGEN GENERATION DEVICE, AND FUEL CELL SYSTEM**
HYDROENTSCHWEFELUNGSVORRICHTUNG, WASSERSTOFFPRODUKTIONSVORRICHTUNG UND BRENNSTOFFZELLENSYSTEM
DISPOSITIF D'HYDRODÉSULFURATION, DISPOSITIF DE PRODUCTION D'HYDROGÈNE ET SYSTÈME DE PILE À COMBUSTIBLE

(30) Priority: 24.10.2011 JP 2011232533
(43) Date of publication of application: 03.09.2014
(73) Proprietor: Panasonic Intellectual Property Management Co., Ltd., Osaka-shi, Osaka 540-6207 (JP)
(72) Inventor: KITA, Hiromi, Osaka 540-6207, (JP); YOSHIDA, Yutaka, Osaka 540-6207, (JP); UKAI, Kunihiro, Osaka 540-6207, (JP)
(74) Representative: Grünecker Patent- und Rechtsanwälte PartG mbB
(86) International application number: PCT/JP2012/006790
(87) International publication number: WO 2013/061580

(56) References cited:
- EP-A2- 1 197 261
- JP-A- 2002 179 406
- JP-A- 2007 055 868
- JP-A- 2007 273 142
- JP-A- 2010 058 995
- JP-A- 2010 067 353
- JP-A- 2010 235 380
- JP-A- 2011 207 704
- JP-A- 2011 207 704
- US-A1- 2010 282 567
- US-A1- 2011 165 477

## Description

### Technical Field

The present invention relates to a hydrodesulfurization device, a hydrogen generator and a fuel cell system.

### Background Art

Typically, a fuel cell system includes a hydrogen generator including a reformer configured to generate a hydrogen-containing gas used as fuel during power generation, from a natural gas or a LPG which is a gas of a general raw material infrastructure, because the hydrogen-containing gas has not been fully developed as a general raw material infrastructure.

In the reformer, a steam reforming reaction is generally employed. In the steam reforming reaction, the hydrogen-containing gas containing hydrogen as a major component is generated in such a way that, for example, a city gas as the raw material and steam are reacted with each other at a temperature which is as high as about 600 to 700 degrees C, using a precious metal based reforming catalyst such as Ni-based catalyst or Ru-based catalyst.

The raw material gas such as the city gas contains a sulfur compound. The sulfur compound is a poisoning substance especially to the reforming catalyst. Therefore, it is necessary to remove this sulfur compound by some way or other. There is proposed a hydrogen generator, in which as the removing method, a method of removing the sulfur compound by hydrodesulfurization using a recycled hydrogen-containing gas is employed and a hydro-desulfurizer is disposed annularly around an outer periphery of a reformer (e.g., see Patent Literature 1).

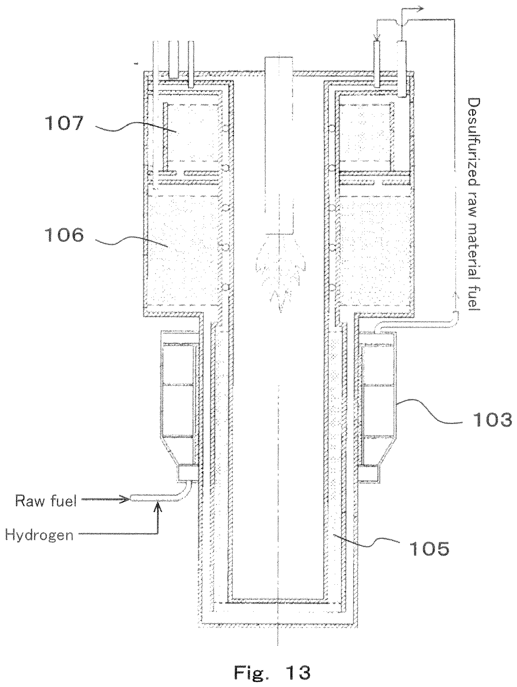

Fig. 13 is a cross-sectional view showing a schematic configuration of the hydrogen generator disclosed in Patent Literature 1. In this configuration, a raw material is supplied from a lower end surface of a hydrodesulfurization device 103. The raw material desulfurized by the hydro-desulfurizer 103 is discharged from an upper end surface of the hydro-desulfurizer 103 and supplied to a reformer 105. A hydrogen-containing gas discharged from the reformer 105 is discharged to outside of the hydrogen generator via a shift converter 106 and a selective oxidation unit 107.

US 2011/0165477 A1 relates to a desulfurizer for removing the sulfur component from a raw fuel. The desulfurizer includes a filled chamber, a supply chamber and discharge chamber.

JP 2011 207704 discloses a hydrodesulfurization (HDS) device comprising a hydro-desulfurizer configured to remove a sulfur component from a raw material with a HDS agent, and a burner configured to heat the hydro-desulfurizer. The hydro-desulfurizer includes a plurality of blocks formed by division in a circumferential direction i.e. by annular partition plates and disposed annularly around an outer periphery of the heater. The raw material flows in the adjacent blocks in opposite directions. The HDS device comprises also a reformer suitable to generate a hydrogen-containing gas using the raw material which has passed through the hydro-desulfurizer. This hydrogen generator can be coupled to a fuel cell suitable to generate electric power using the hydrogen-containing gas supplied from the hydrogen generator.

### Citation List

### Patent Literature

Patent Literature 1: Japanese Laid-Open Patent Application Publication No. 2010-058995

### Summary of Invention

### Technical Problem

However, for the hydrogen generator disclosed in Patent Literature 1, improvement of a utilization efficiency of a hydrodesulfurization catalyst is not studied adequately.

The present invention has been made under the circumstances, and an object of the present invention is to improve a utilization efficiency of a hydrodesulfurization catalyst in a hydrogen generator and a fuel cell system including a hydro-desulfurizer, as compared to a conventional example.

### Solution to Problem

To solve the above mentioned problem, according to an aspect of the present invention, a hydrodesulfurization device is defined in claim 1.

A hydrogen generator according to an aspect of the present invention, comprises the hydrodesulfurization device as described above.

A fuel cell system according to an aspect of the present invention, comprises the hydrogen generator as described above; and a fuel cell configured to generate electric power using the hydrogen-containing gas supplied from the hydrogen generator.

### Advantageous Effects of Invention

A hydrogen generator and a fuel cell system including a hydro-desulfurizer according to an aspect of the present invention, can improve
a utilization efficiency of a hydrodesulfurization catalyst as compared to a conventional example.

### Brief Description of Drawings

[Fig. 1] Fig. 1 is a conceptual view showing an exemplary schematic configuration of a hydrodesulfurization device according to Embodiment 1.
[Fig. 2] Fig. 2A is a perspective view showing an exemplary configuration of the hydrodesulfurization device according to Embodiment 1 and Fig. 2B is a view showing an internal structure of the exemplary configuration of the hydrodesulfurization device in a see-through manner.
[Fig. 3] Fig. 3A is a top plan view showing the exemplary configuration of the hydrodesulfurization device according to Embodiment 1 and Fig. 3B is a developed view showing the internal structure of the exemplary configuration of the hydrodesulfurization device.
[Fig. 4] Fig. 4A is a perspective view showing the exemplary configuration of the hydrodesulfurization device according to Embodiment 1 and Fig. 4B is a view showing the internal structure of the exemplary configuration of the hydrodesulfurization device in a see-through manner.
[Fig. 5] Fig. 5A is a top plan view showing the exemplary configuration of the hydrodesulfurization device according to Embodiment 1 and Fig. 5B is a developed view showing the internal structure of the exemplary configuration of the hydrodesulfurization device.
[Fig. 6] Fig. 6A is a view showing an internal structure of an exemplary configuration of a hydrodesulfurization device according to Embodiment 2, in a see-through manner, and Fig. 6B is a top plan view showing the internal structure of the exemplary configuration of the hydrodesulfurization device.
[Fig. 7] Fig. 7A is a view showing the internal structure of the exemplary configuration of the hydrodesulfurization device according to Embodiment 2, in a see-through manner, and Fig. 7B is a top plan view showing the internal structure of the exemplary configuration of the hydrodesulfurization device.
[Fig. 8] Fig. 8A is an exploded view showing an exemplary configuration of a hydrodesulfurization device according to Embodiment 3 and Fig. 8B is a developed view showing the exemplary configuration of the hydrodesulfurization device.
[Fig. 9] Fig. 9A is an exploded view showing an exemplary configuration of a hydrodesulfurization device according to modified example of Embodiment 3 and Fig. 9B is a developed view showing the exemplary configuration of the hydrodesulfurization device.
[Fig. 10] Fig. 10 is a cross-sectional view showing an exemplary schematic configuration of a hydrogen generator according to Embodiment 4.
[Fig. 11] Fig. 11 is a cross-sectional view showing an exemplary schematic configuration of a hydrogen generator according to modified example of Embodiment 4.
[Fig. 12] Fig. 12 is a cross-sectional view showing an exemplary schematic configuration of a fuel cell system according to Embodiment 5.
[Fig. 13] Fig. 13 is a cross-sectional view showing a schematic configuration of a hydrogen generator disclosed in Patent Literature 1.

### Description of Embodiments

The present inventors discovered that a utilization efficiency of a hydrodesulfurization catalyst in a hydrogen generator including a hydro-desulfurizer was insufficient and studied its cause. As a result, the present inventors attained the findings below.

The hydrodesulfurization catalyst acts well at a relatively high temperature (e.g., 200 to 300 degrees C). However, in a conventional simple hydro-desulfurizer which is a double-cylinder container, a raw material of a low temperature (e.g., 50 degrees C) flows in the vicinity of an inlet, so that its catalyst temperature decreases to a level below a proper temperature range. The catalyst temperature rises gradually in a direction from an upstream region to a downstream region and reaches a highest temperature in the vicinity of an outlet. That is, the catalyst forms a temperature gradient from the upstream region to the downstream region, and its temperature becomes below a proper temperature range in the upstream region. Therefore, the catalyst cannot be utilized efficiently and its utilization efficiency reduces.

As will be described below, based on this finding, the present inventors discovered a configuration of a hydrodesulfurization device according to claim 1 in which the catalyst temperature in the upstream region is raised to lessen the temperature gradient from the upstream region to the downstream region, thereby improving the utilization efficiency of the hydrodesulfurization catalyst.

### (Embodiment 1)

A hydrodesulfurization device of Embodiment 1 comprises a hydro-desulfurizer configured to remove a sulfur component from a raw material; and a heater configured to heat the hydro-desulfurizer; wherein the hydro-desulfurizer includes a plurality of blocks formed by division along its length direction in a circumferential direction and disposed annularly around an outer periphery of the heater; wherein the hydro-desulfurizer is configured such that the raw material having passed through inside of each of the blocks moves to its adjacent block; and wherein the hydro-desulfurizer is configured such that adjacent blocks are communicated with each other and the raw material flows in the adjacent blocks in opposite directions.

In accordance with this configuration, since the raw material flows in adjacent blocks in opposite directions, the block including an inlet can receive heat from the raw material increased in temperature in the adjacent block. Therefore, even when the raw material of a low temperature flows into the hydro-desulfurizer, it becomes possible to suppress a decrease in a catalyst temperature. As a result, the utilization efficiency of the hydrodesulfurization catalyst can be improved as compared to a conventional example.

As compared to a case where the raw material flows in the adjacent blocks in the same direction, a raw material passage via which the blocks formed by division are communicated with each other can be simplified. The reason is as follows. In a case where the raw material is flowed in the same direction, it is necessary to provide a raw material passage corresponding to an axial length of the hydro-desulfurizer, to communicate one end surface of a particular block with the opposite end surface of its adjacent block. On the other hand, in a case where the raw material is flowed in the opposite directions, it is sufficient that the end surfaces of the adjacent blocks at the same side are communicated with each other. This can shorten the raw material passage for communication, and eliminate a need for processing (e.g., bending) for performing drawing and routing of the raw material passage in the axial direction of the hydro-desulfurizer. As a result, the hydrodesulfurization device can be manufactured easily.

In the hydrodesulfurization device, one end portions of the adjacent blocks in an axial direction of the hydro-desulfurizer may be communicated with each other, and the other end portions of the adjacent blocks in the axial direction of the hydro-desulfurizer may be inhibited from being communicated with each other. In the hydro-desulfurization device, the hydro-desulfurizer may include the blocks of an even number.

In a case where the blocks of an odd number are provided, a raw material inlet and a raw material outlet cannot be provided on the end surfaces at the same side in the axial direction, whereas in a case where the blocks of an even number are provided, the raw material inlet and the raw material outlet can be provided on the end surfaces at the same side in the axial direction. Therefore, it is not necessary to perform drawing and routing of one of the raw material supply passage and the raw material supply passage to the end surface on the opposite side. This can shorten a passage length, and eliminate a need for processing (e.g., bending) for performing drawing and routing of the raw material passage. As a result, the hydrodesulfurization device can be manufactured easily.

Hereinafter, a specific example of the present embodiment will be described with reference to the drawings.

### [Device configuration]

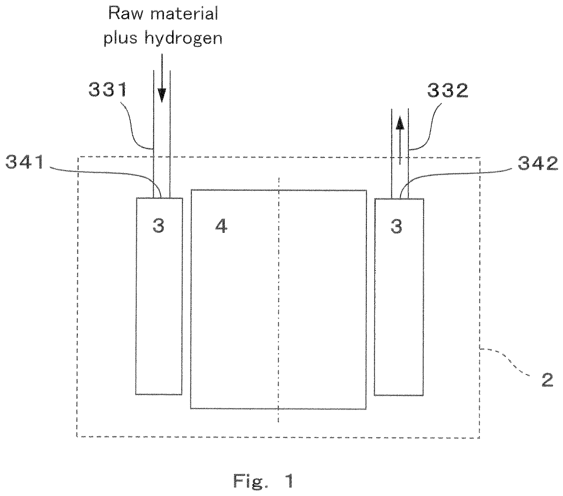

Fig. 1 is a conceptual view showing an exemplary schematic configuration of a hydrodesulfurization device according to Embodiment 1.

In the example shown in Fig. 1, a hydrodesulfurization device 2 of the present embodiment includes a heater 4, a hydro-desulfurizer 3, a raw material supply passage 331 and a raw material discharge passage 332.

The heater 4 heats the hydro-desulfurizer 3. The heater 4 may be configured to form, for example, a tubular shape. As the heater 4, for example, there are an electric heater, and a burner for combusting hydrogen (off-gas) which has not been consumed in power generation in a fuel cell.

The hydro-desulfurizer 3 removes a sulfur compound from a raw material. The hydro-desulfurizer 3 includes a plurality of blocks formed by division in a circumferential direction and disposed annularly around an outer periphery of the heater 4. The hydro-desulfurizer 3 is configured such that the raw material which has passed through a particular block moves to its adjacent block.

The raw material contains an organic compound comprised of at least carbon and hydrogen as major elements. As the raw material, specifically, there are hydrocarbon such as a natural gas, a city gas, a LPG, and a LNG, and an alcohol gas such as methanol or ethanol. The city gas refers to a gas supplied from a gas company to customer home, etc., via a raw material gas infrastructure.

Each of the blocks formed by division is filled with a hydrodesulfurization agent. As the hydrodesulfurization agent, for example, used is a CuZn-based catalyst having a function of converting a sulfur compound into hydrogen sulfide and a function of adsorbing hydrogen sulfide. The hydrodesulfurization agent is not limited to the present example. The hydrodesulfurization agent may be comprised of a CoMo-based catalyst used to convert the sulfur compound in the raw material gas into hydrogen sulfide, and a ZnO-based catalyst or a CuZn-based catalyst which is a sulfur adsorbing agent provided at a downstream side of the CoMo-based catalyst to adsorb and remove hydrogen sulfide.

The raw material supply passage 331 is a passage through which the raw material supplied to the hydro-desulfurizer 3 flows. The raw material supply passage 331 is connected to a raw material inlet 341 of the hydro-desulfurizer 3. Hydrogen is added to the raw material supply passage 331. A hydrogen source is not particularly limited. For example, a hydrogen-containing gas generated in a reformer (not shown) is added to the raw material supply passage 331. The reformer generates the hydrogen-containing gas using the raw material which has passed through the hydro-desulfurizer 3 through a reforming reaction.

The raw material discharge passage 332 is a passage through which the raw material discharged from the hydro-desulfurizer 3 flows. One end of the raw material discharge passage 332 is connected to a raw material outlet 342 provided at one end surface, for example, an upper end surface of the hydro-desulfurizer 3, while the other end thereof is connected to the reformer.

### [Detailed configuration of hydro-desulfurizer]

Next, a specific example of the hydro-desulfurizer including the plurality of blocks formed by division in the circumferential direction, will be described.

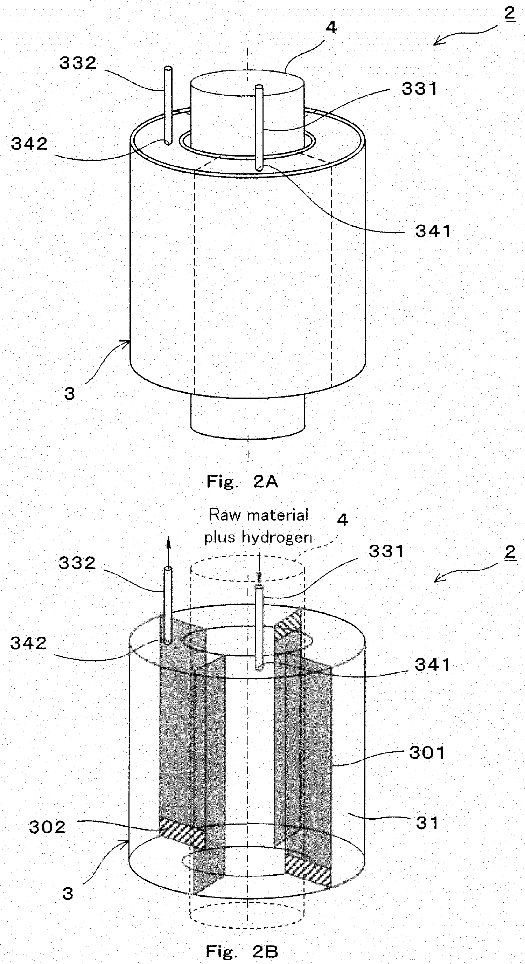

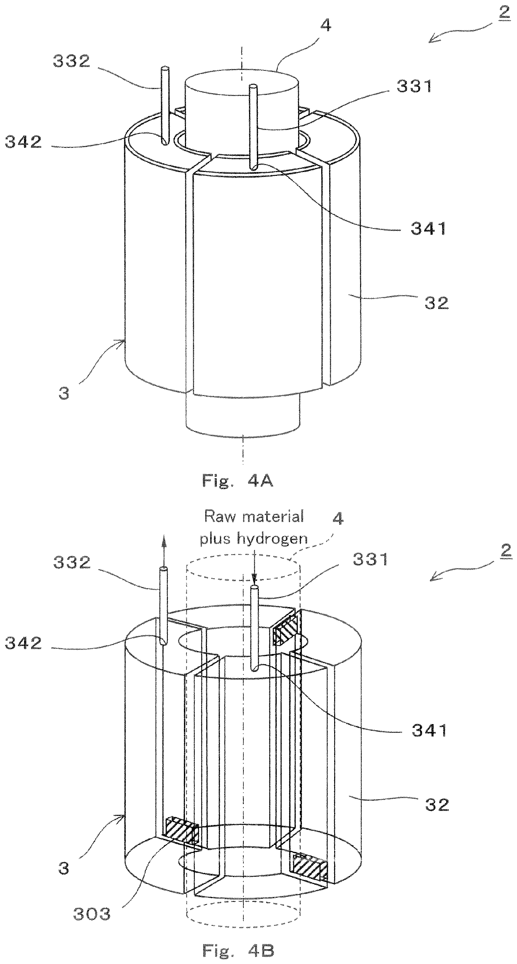

Figs. 2A and 4A are perspective views showing an exemplary configuration of the hydrodesulfurization device according to Embodiment 1 and Fig. 2B and 4B are views showing an internal structure of the exemplary configuration of the hydrodesulfurization device in a see-through manner.

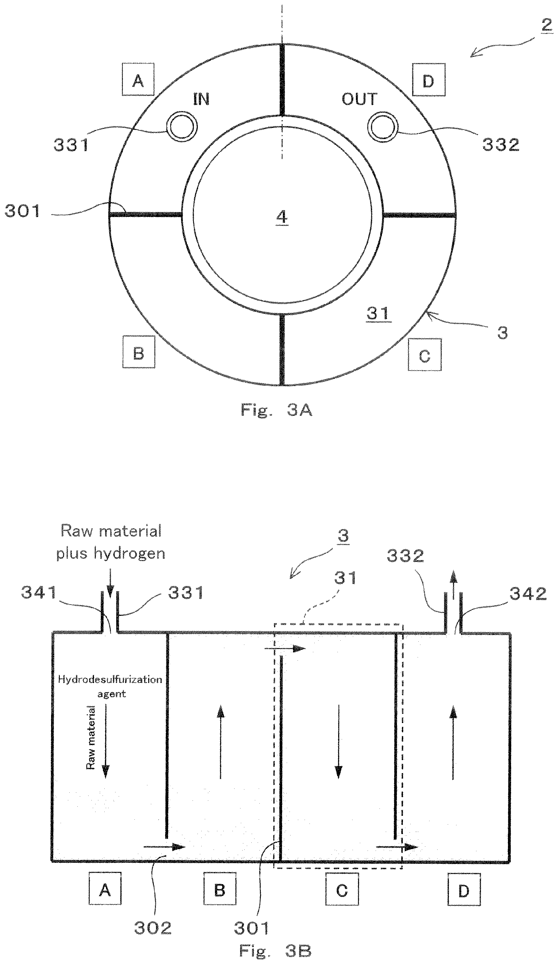

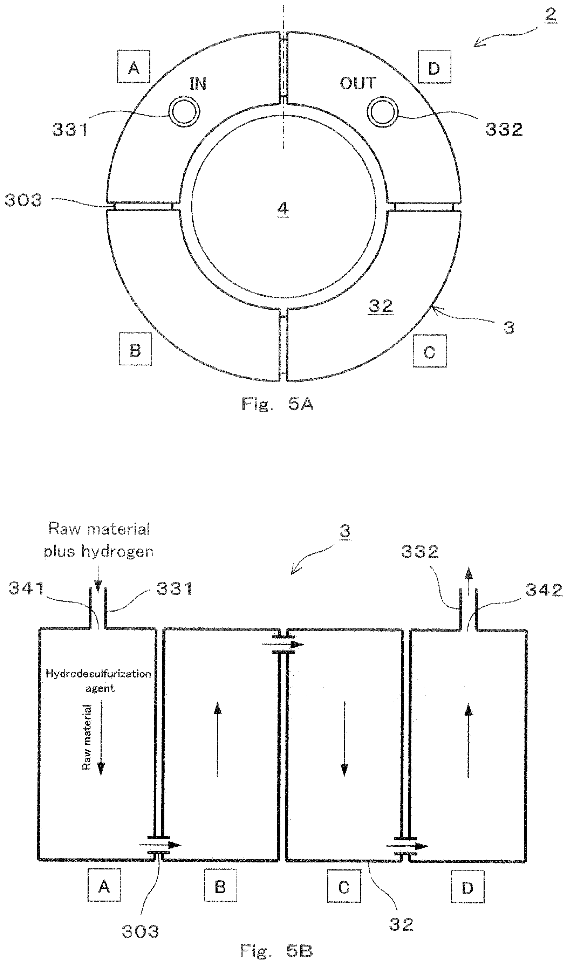

Figs. 3A and 5A are top plan views showing the exemplary configuration of the hydrodesulfurization device according to Embodiment 1 and Figs. 3B and 5B are developed views showing the internal structure of the hydrodesulfurization device.

In the example shown in Figs. 2A and 2B and Figs.3A and 3B, the hydro-desulfurizer 3 of the present embodiment is configured such that an annular container disposed annularly around the outer periphery of the heater 4 is divided in the circumferential direction by a plurality of separating plates 301 to form a plurality of blocks 31. Each of the blocks 31 formed by division is filled with the hydrodesulfurization agent. Although in the example shown in Figs. 2A and 2B and Figs.3A and 3B, a ring-shaped container is divided in the circumferential direction to form the plurality of blocks, the hydro-desulfurizer 3 is not limited to the present example, so long as its shape is annular. For example, a container of a rectangular-annular shape may be divided in the circumferential direction to form the plurality of blocks.

The raw material inlet 341 and the raw material outlet 342 are provided at upper end surfaces of adjacent blocks 31, respectively. The raw material supply passage 331 and the raw material discharge passage 332 are connected to the raw material inlet 341 and the raw material outlet 342, respectively.

Communicating holes 302 are provided at upper ends or lower ends of the separating plates 301 to allow communication with adjacent blocks 31, in order to flow the raw material sequentially in the blocks 31, from the raw material inlet 341 to the raw material outlet 342. Note that no communicating hole is provided in the separating plate between the blocks 31 provided with the raw material inlet 341 and the raw material outlet 342 to inhibit communication between these two adjacent blocks 31.

In the example shown in Figs. 4A and 4B and Figs.5A and 5B, a plurality of independent containers (blocks) 32 are arranged in the circumferential direction to construct an annular hydro-desulfurizer 3 and disposed around the outer periphery of the heater 4. The independent containers (blocks) 32 are arranged in a manner such that hollow portions exist in the hydro-desulfurizer 3 by cutting circumferential portions of an annular container. Each of the independent blocks 32 is filled with the hydrodesulfurization agent.

The above stated examples are merely exemplary, and the hydro-desulfurizer may form any shape so long as it includes the plurality of blocks formed by division in the circumferential direction.

The raw material inlet 341 and the raw material outlet 342 are provided at upper end surfaces of adjacent independent blocks 32, and the raw material supply passage 331 and the raw material discharge passage 332 are connected to the raw material inlet 341 and the raw material outlet 342, respectively.

Communicating passages 303 are provided at upper sides or lower sides of circumferential end surfaces of the independent blocks 32 to allow communication with adjacent independent blocks 32, in order to flow the raw material sequentially in the independent blocks 32 from the raw material inlet 341 to the raw material outlet 342. Note that no communicating passage is provided in circumferential end surfaces of the independent blocks 32 provided with the raw material inlet 341 and the raw material outlet 342 to inhibit communication between these two adjacent blocks 32.

Although in the examples of Figs. 2A and 2B to Figs. 5A and 5B, the hydro-desulfurizer is comprised of the circumferential four parts, the number of division is not limited to this. Nonetheless, the number of division in the circumferential direction is desirably an even number, to provide the raw material inlet and the raw material outlet on the end surfaces at the same side.

### [Operation]

Hereinafter, the operation of the hydrodesulfurization device 2 will be described with reference to Fig. 3. The raw material is supplied from a raw material supply source (not shown) to the raw material supply passage 331. A part of the hydrogen-containing gas discharged from a CO reducing unit (not shown), as hydrogen, is added to the raw material flowing in the raw material supply passage 331. The raw material to which hydrogen is added is supplied to inside of the hydro-desulfurizer 3 through the raw material inlet 341. The raw material passes through the circumferential blocks 31 in the order of A → B → C → D, and reaches the raw material outlet 342. At this time, the raw material flows in adjacent blocks 31 in opposite directions. During this time, on the inside of the hydro-desulfurizer 3, the raw material and the hydrodesulfurization agent are reacted with each other, and thereby the sulfur compound is removed from the raw material. After that, the desulfurized raw material is supplied to the reformer (not shown) via the raw material outlet 342 and the raw material discharge passage 332.

### (Embodiment 2)

A hydrodesulfurization device of Embodiment 2 is configured such that the inlet and the outlet of the hydro-desulfurizer are provided at end surfaces of end portions of adjacent blocks, respectively, the end portions being inhibited from being communicated with the adjacent blocks, the inlet and the outlet being located on each one side of the end surfaces, the one side being in locations at which the blocks provided with the inlet and the outlet are adjacent to each other in the circumferential direction, in the hydrodesulfurization device of Embodiment 1.

With this configuration, since the raw material inlet and the raw material outlet are close to each other, the raw material supply passage and the raw material discharge passage connected to the raw material inlet and the raw material outlet, respectively, are easily made adjacent to each other so that heat exchange occurs between them. By placing the raw material supply passage and the raw material discharge passage adjacently to each other, heat exchange occurs between the raw material flowing into the hydro-desulfurizer and the raw material flowing out of the hydro-desulfurizer, and thereby the raw material flowing into the hydro-desulfurizer can easily raise its temperature as compared to a configuration in which the raw material inlet and the raw material outlet are placed apart from each other. This makes it possible to suppress a temperature of the catalyst present in the vicinity of the raw material inlet of the hydro-desulfurizer from being lowered to a level below a proper temperature range. As a result, the utilization efficiency of the catalyst at the raw material inlet side can be improved.

The end portions refer to end portions in an axial direction of the annular hydro-desulfurizer.

The hydrodesulfurization device of the present embodiment may be identical in configuration to the hydrodesulfurization device of Embodiment 1 except for the above features.

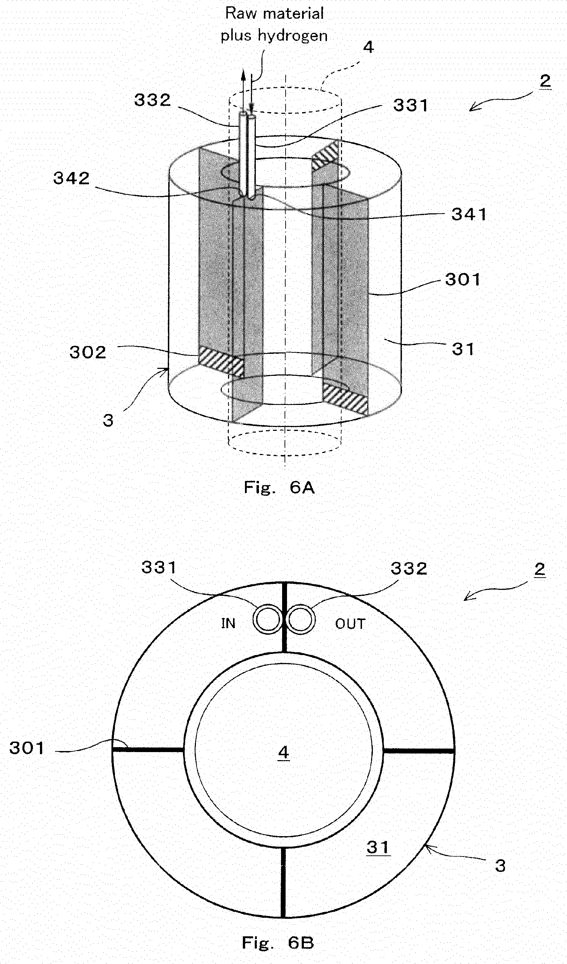

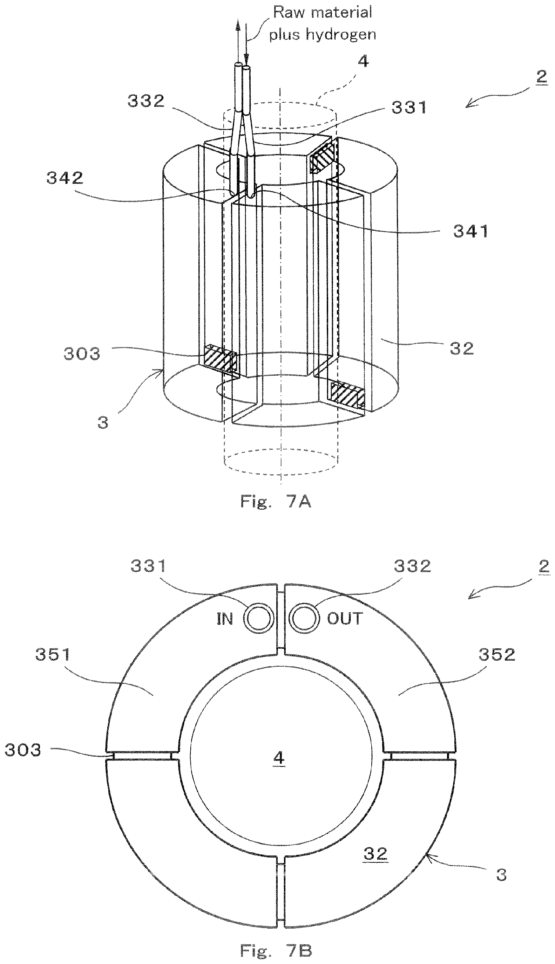

Figs. 6A and 7A are views showing an internal structure of an exemplary configuration of the hydrodesulfurization device according to Embodiment 2, in a see-through manner, and Figs. 6B and 7B are top plan views showing the internal structure of the hydrodesulfurization device.

In the example shown in Figs. 6A and 6B, the hydrodesulfurization device 2 of the present embodiment includes the heater 4, the hydro-desulfurizer 3, the raw material supply passage 331 and the raw material discharge passage 332. The hydro-desulfurizer 3 is configured such that a cylindrical container disposed annularly around the outer periphery of the heater 4 is divided in the circumferential direction by the plurality of separating plates 301 to form the blocks 31.

Each of the blocks 31 formed by division is filled with the hydrodesulfurization agent.

The raw material inlet 341 and the raw material outlet 342 of the hydro-desulfurizer 3 are close to each other in the circumferential direction such that the separating plate 301 for inhibiting communication between the adjacent blocks 31 is interposed between the raw material inlet 341 and the raw material outlet 342. In the example shown in Figs. 7A and 7B, the hydrodesulfurization device 2 of the present embodiment includes the heater 4, the hydro-desulfurizer 3, the raw material supply passage 331 and the raw material discharge passage 332. A plurality of independent blocks 32 are arranged in the circumferential direction to construct the annular hydro-desulfurizer 3 and disposed around the outer periphery of the heater 4. The independent containers (blocks) 32 are arranged in a manner such that hollow portions exist in the hydro-desulfurizer 3 by cutting circumferential portions of an annular container. Each of the independent blocks 32 is filled with the hydrodesulfurization agent.

The raw material inlet 341 and the raw material outlet 342 of the hydro-desulfurizer 3 are provided at end surfaces 351 and 352 of end portions of adjacent independent blocks 32, respectively, the end portions being inhibited from being communicated with the adjacent independent blocks 32, the raw material inlet 341 and the raw material outlet 342 being located on each one side of the end surfaces 351 and 352, the one side being in locations at which the blocks provided with the raw material inlet 341 and the raw material outlet 342 are adjacent to each other in the circumferential direction.

With this configuration, the raw material inlet 341 and the raw material outlet 342 are placed at the end surfaces on the same side in the hydro-desulfurizer 3 such that they are close to each other. Therefore, the raw material supply passage 331 and the raw material discharge passage 332 connected to the raw material inlet 341 and the raw material outlet 342, respectively, are easily made adjacent to each other so that heat exchange occurs between them.

The operation of the hydrodesulfurization device of the present embodiment is identical to that of Embodiment 1 and will not be described in detail.

### (Embodiment 3)

A hydrodesulfurization device of Embodiment 3 is configured such that the raw material having passed through inside of each of the blocks formed by division moves to its adjacent block in the end portion in the axial direction of the hydro-desulfurizer, and the end portion includes a space in which the hydrodesulfurization agent is not filled, in the hydrodesulfurization device of one of Embodiment 1 and Embodiment 2.

In the hydro-desulfurizer, the end portion of each of the blocks formed by division includes a catalyst holding member holding a hydrodesulfurization agent and including gas passage holes and the hydrodesulfurization agent provided on the catalyst holding member, and the space may be formed between an end plate in the axial direction and the catalyst holding member.

With this configuration, the raw material is dispersed uniformly in the space as compared to a configuration in which the space is not formed between the end plate in the axial direction and the catalyst holding member. Therefore, uneven flow of the raw material in the blocks formed by division does not take place, and the raw material can be flowed uniformly in the whole region of the filled catalyst. As a result, the utilization efficiency of the catalyst can be improved.

In the hydrodesulfurization device, adjacent blocks may be communicated with each other via the space.

The hydrodesulfurization device of the present embodiment may be identical in configuration to the hydrodesulfurization devices of Embodiment 1 and Embodiment 2 except for the above features.

### [Device configuration]

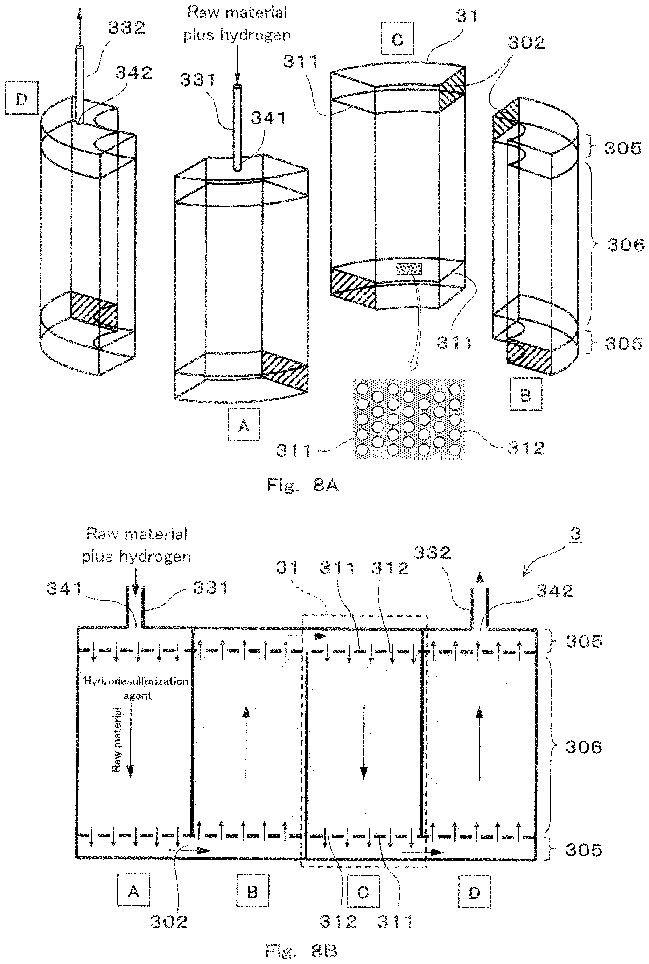

Fig. 8A is an exploded view showing an exemplary configuration of the hydrodesulfurization device according to Embodiment 3 and Fig. 8B is a developed view showing the exemplary configuration of the hydrodesulfurization device.

In the example shown in Figs. 8A and 8B, the hydrodesulfurization device 2 of the present embodiment includes the heater (not shown), the hydro-desulfurizer 3, the raw material supply passage 331 and the raw material discharge passage 332.

The hydro-desulfurizer 3 includes the plurality of blocks 31 formed by division in the circumferential direction and is configured such that the raw material having passed through inside of each of the blocks 31 formed by division moves to its adjacent block in the end portion in the axial direction of the hydro-desulfurizer 3, and the end portion includes a space 305 in which the hydrodesulfurization agent is not filled. Each of the end portions of each block 31 may include a catalyst holding member 311 holding the hydrodesulfurization agent and including gas passage holes 312 and the hydrodesulfurization agent provided on the catalyst holding member 311, and the space 306 is formed between the end plate in the axial direction and the catalyst holding member 311.

The spaces 305 and a catalyst filling section 306 are defined by the catalyst holding members 311 at axial both end portions. The catalyst filling section 306 is filled with the hydrodesulfurization agent. The catalyst holding members 311 include the gas passage holes 312 to allow the raw material to pass therethrough as described above. The catalyst holding members 311 may be, for example, metal net or punching metal made of metal such as stainless steel.

In the hydrodesulfurization device 3, the adjacent blocks 31 are communicated with each other via the spaces 305. Note that communication is inhibited in the spaces 305 between the blocks 31 provided with the raw material inlet 341 and the raw material outlet 342.

### [Operation]

Hereinafter, the operation of the hydro-desulfurizer 3 will be described with reference to Fig. 8B.

The raw material is supplied from a raw material supply source (not shown) to the raw material supply passage 331. A part of the hydrogen-containing gas discharged from a CO reducing unit (not shown), as hydrogen, is added to the raw material flowing in the raw material supply passage 331. The raw material to which hydrogen is added is supplied to inside of the hydro-desulfurizer 3 through the raw material inlet 341. The raw material flows into the space 305 of a block A. Since a pressure loss in the catalyst filling section 306 is greater than that in the space 305, the raw material spreads uniformly in the entire space 305. Thereafter, the raw material flows uniformly in the catalyst filling section 306, through the gas passage holes 312 of the catalyst holding member 311, and flows to the space 305 at an opposite side. The space 305 is communicated with the adjacent block 31, and therefore the raw material flows to the adjacent block 31 through the space 305. In this way, the raw material passes through the blocks 31 formed by division in the circumferential direction in the order of A → B → C → D, and reaches the raw material outlet 342. At this time, the raw material flows in the adjacent blocks 31 in opposite directions. During this time, on the inside of the hydro-desulfurizer 3, the raw material and the hydrodesulfurization agent are reacted with each other, and thereby the sulfur compound is removed from the raw material. After that, the desulfurized raw material is supplied to the reformer (not shown) via the raw material outlet 342 and the raw material discharge passage 332.

### [Modified example]

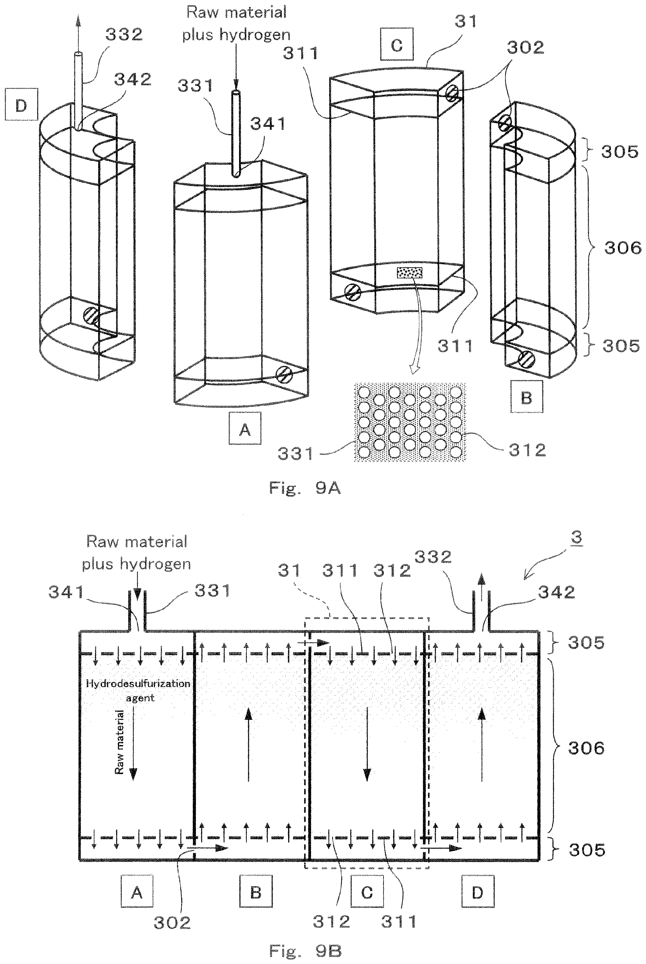

Fig. 9A is an exploded view showing an exemplary configuration of a hydro-desulfurizer according to modified example of Embodiment 3 and Fig. 9B is a developed view showing the exemplary configuration of the hydro-desulfurizer.

As shown in Figs. 9A and 9B, the spaces 305 of the adjacent blocks 31 are communicated with each other through communicating holes 302 with a smaller cross-sectional area than a cross-section of the space 305 in a direction perpendicular to the circumferential direction. The communicating holes 302 may be configured to form, for example, a circular shape, a rectangular shape or a square shape.

The hydro-desulfurizer of the present modified example may be identical in configuration to that of Embodiment 3 except for the above features.

The operation of the hydro-desulfurizer of the present modified example is identical to that of Embodiment 3 and will not be described in detail.

### (Embodiment 4)

A hydrogen generator of Embodiment 4 includes the hydrodesulfurization device according to any one of Embodiment 1 to Embodiment 3 and their modified examples, and a reformer configured to generate the hydrogen-containing gas using the raw material which has passed through the hydro-desulfurizer.

With this configuration, even when the raw material of a low temperature flows into the hydro-desulfurizer in the hydrogen generator, it becomes possible to suppress a decrease in a catalyst temperature. As a result, the utilization efficiency of the hydrodesulfurization catalyst can be improved as compared to the conventional example.

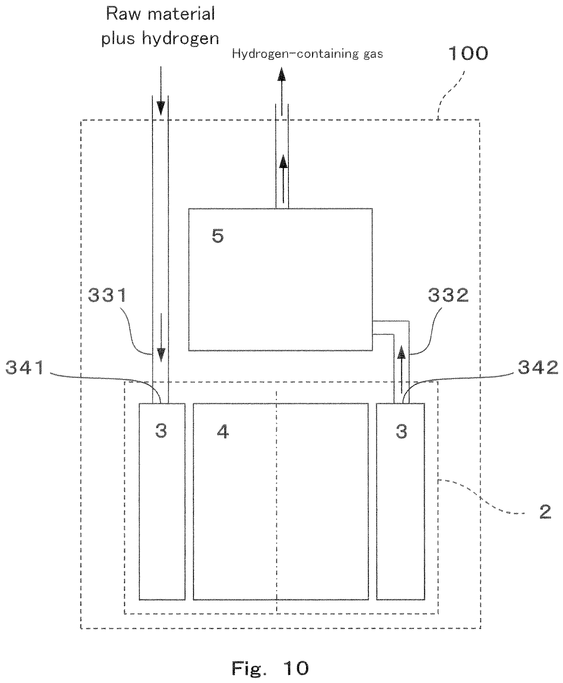

Fig. 10 is a cross-sectional view showing an exemplary schematic configuration of a hydrogen generator according to Embodiment 4.

In the example of Fig. 10, a hydrogen generator 100 of the present embodiment includes the hydrodesulfurization device 2 of Embodiment 1 and a reformer 5.

The reformer 5 generates the hydrogen-containing gas through a reforming reaction using the raw material. The raw material contains an organic compound comprised of at least carbon and hydrogen as major elements. As the raw material, specifically, there are hydrocarbon such as a natural gas, a city gas, a LPG, and a LNG, and alcohol such as methanol or ethanol. The city gas refers to a gas supplied from a gas company to customer home, etc., via a pipe. The reforming reaction may be any one of reforming reactions, which are, for example, a steam reforming reaction, an auto thermal reaction and a partial oxidation reaction. The reforming reaction is an endothermic reaction. Therefore, the reforming catalyst is required to raise its temperature to a high temperature (e.g., 600 to 700 degrees C). The hydrogen-containing gas generated in the reformer 5 is supplied to a hydrogen consuming device (not shown) via a hydrogen supply path. An outer shell of the reformer 5 may be formed of, for example, metal such as stainless steel.

### [Operation]

Hereinafter, the operation of the hydrogen generator 100 will be described.

The raw material is supplied from a raw material supply source (not shown) to the raw material supply passage 331. Apart of the hydrogen-containing gas discharged from the hydrogen generator 100, as hydrogen, is added to the raw material flowing in the raw material supply passage 331. The raw material to which hydrogen is added is supplied to inside of the hydro-desulfurizer 3 through the raw material inlet 341.

On the inside of the hydro-desulfurizer 3, the sulfur compound is removed from the raw material. After that, the desulfurized raw material is supplied to the reformer 5 via the raw material outlet 342 and the raw material discharge passage 332.

On the inside of the reformer 5, the hydrogen-containing gas is generated through the
reforming reaction using the desulfurized raw material. A part of the generated hydrogen-containing gas is supplied from the reformer 5 to the raw material supply passage 331, while the remaining part of the hydrogen-containing gas is supplied to the hydrogen-consuming device (not shown).

### [Modified example]

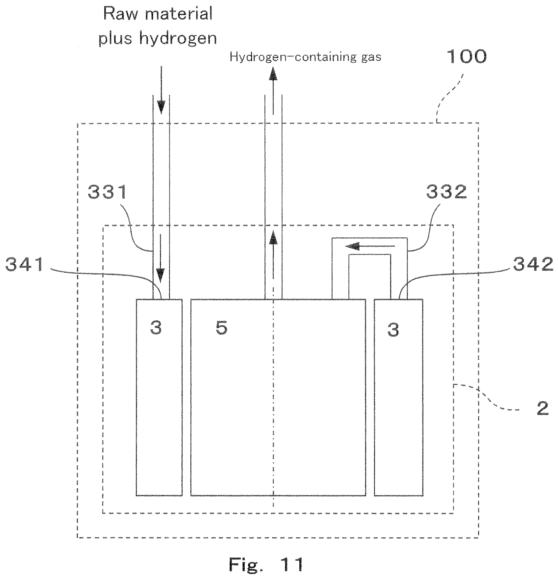

Fig. 11 is a cross-sectional view showing an exemplary schematic configuration of a hydrogen generator according to modified example of Embodiment 4.

As shown in Fig. 11, in the present modified example, the hydrogen generator 100 includes the hydrodesulfurization device 2, and is configured such that the heater is the reformer 5 configured to generate the hydrogen-containing gas using the raw material which has passed through the hydro-desulfurizer 3.

In this configuration, the temperature of the reformer 5 becomes as high as 600 to 700 degrees C. By utilizing the reformer 5 as a heat source, the hydro-desulfurizer 3 disposed annularly around the outer periphery of the reformer 5 can be heated. Because of this, without a need to provide the heater separately, a utilization efficiency of heat can be improved, and device can be simplified.

### (Embodiment 5)

A fuel cell system of Embodiment 5 includes the hydrogen generator of any one of Embodiment 4 and the modified example thereof, and a fuel cell configured to generate electric power using the hydrogen-containing gas supplied from the hydrogen generator.

With this configuration, in the fuel cell system, even when the raw material of a low temperature flows into the hydro-desulfurizer, it becomes possible to suppress a decrease in a catalyst temperature. As a result, the utilization efficiency of the hydrodesulfurization catalyst can be improved as compared to the conventional example.

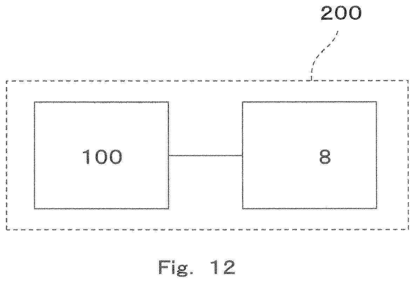

Fig. 12 is a cross-sectional view showing an exemplary schematic configuration of a fuel cell system according to Embodiment 5.

In the example shown in Fig. 12, a fuel cell system 200 of the present embodiment includes the hydrogen generator 100 of Embodiment 4 and a fuel cell 8.

The fuel cell 8 is a fuel cell configured to generate electric power using the hydrogen-containing gas supplied from the hydrogen generator 100. The fuel cell 8 may be any kind of fuel cells. For example, the fuel cell 8 may be a polymer electrolyte fuel cell (PEFC), a solid oxide fuel cell or a phosphorus acid fuel cell.

During a power generation operation, the fuel cell system 200 generates electric power using the hydrogen-containing gas supplied from the hydrogen generator 100. The operation of the hydrogen generator 100 of the present embodiment is identical to that of Embodiment 4 assuming that the fuel cell 8 is the hydrogen-consuming device of Embodiment 4, and therefore will not be described in detail.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of conveying out the invention. The details of the structure and/or function may be varied substantially without departing from the invention as claimed.

### Industrial Applicability

A hydrogen generator and a fuel cell system including a hydro-desulfurizer according to an aspect of the present invention are able to improve a utilization efficiency of a hydrodesulfurization catalyst as compared to a conventional example. Therefore, the aspect of the present invention can be used as a hydrodesulfurization device, a hydrogen generator and a fuel cell system.

### Reference Signs List

- 2: hydrodesulfurization device
- 3: hydro-desulfurizer
- 4: heater
- 5: reformer
- 8: fuel cell
- 31: block formed by division
- 32: independent block
- 100: hydrogen generator
- 200: fuel cell system
- 301: separating plate
- 302: communicating hole
- 303: communicating passage
- 305: space
- 306: catalyst filling section
- 311: catalyst holding member
- 312: gas passage hole
- 331: raw material supply passage
- 332: raw material discharge passage
- 341: raw material inlet
- 342: raw material outlet

## Claims

1. A hydrodesulfurization device comprising:
a hydro-desulfurizer (3) configured to remove a sulfur component from a raw material; and
a heater (4) configured to heat the hydro-desulfurizer (3);
wherein the hydro-desulfurizer (3) includes a plurality of blocks (31), formed by division along its length direction in a circumferential direction, and disposed annularly around an outer periphery of the heater (4);
wherein the hydro-desulfurizer (3) is configured such that the raw material having passed through inside of each of the blocks (31) moves to its adjacent block (31); and
wherein the hydro-desulfurizer (3) is configured such that adjacent blocks (31) are communicated with each other and the raw material flows in the adjacent blocks (31) in opposite directions.

2. The hydrodesulfurization device according to claim 1, wherein one end portions of the adjacent blocks (31) in an axial direction of the hydro-desulfurizer (3) are communicated with each other, and the other end portions of the adjacent blocks (31) in the axial direction of the hydro-desulfurizer (3) are inhibited from being communicated with each other.

3. The hydrodesulfurization device according to claim 2, wherein the hydro-desulfurizer (3) includes the blocks (31) of an even number.

4. The hydrodesulfurization device according to claim 3, wherein an inlet and an outlet of the hydro-desulfurizer (3) are provided at end surfaces of end portions of adjacent blocks (31), respectively, the end portions being inhibited from being communicated with the adjacent blocks (31), the inlet and the outlet being located on each one side of the end surfaces, the one side being in locations at which the blocks provided with the inlet and the outlet are adjacent to each other in the circumferential direction.

5. The hydrodesulfurization device according to any one of claims 1 to 4, wherein the hydro-desulfurizer (3) is configured such that the raw material having passed through inside of each of the blocks (31) moves to its adjacent block in an end portion in the axial direction of the hydro-desulfurizer (3), and the end portion includes a space in which a hydrodesulfurization agent is not filled.

6. The hydrodesulfurization device according to claim 5, wherein the end portion of each of the blocks (31) includes a catalyst holding member holding the hydrodesulfurization agent and including gas passage holes and the hydrodesulfurization agent provided on the catalyst holding member, and the space is formed between an end plate in the axial direction and the catalyst holding member.

7. The hydrodesulfurization device according to claim 5 or 6, wherein spaces of the adjacent blocks (31) are communicated with each other through communicating holes with a smaller cross-sectional area than the space.

8. A hydrogen generator comprising:
the hydrodesulfurization device according to any one of claims 1 to 7; and
a reformer (5) configured to generate a hydrogen-containing gas using the raw material which has passed through the hydro-desulfurizer (3).

9. The hydrogen generator according to claim 8, wherein the heater (4) is the reformer (5).

10. A fuel cell system comprising:
the hydrogen generator according to claim 8 or 9; and
a fuel cell (8) configured to generate electric power using the hydrogen-containing gas supplied from the hydrogen generator.

## Patentansprüche

1. Hydrodesulfurierungs-Vorrichtung, die umfasst:
eine Hydrodesulfurierungs-Einrichtung (3), die so ausgeführt ist, dass sie einen Schwefel-Bestandteil aus einem Rohmaterial entfernt; sowie
eine Heizeinrichtung (4), die so ausgeführt ist, dass sie die Hydrodesulfurierungs-Einrichtung (3) erhitzt;
wobei die Hydrodesulfurierungs-Einrichtung (3) eine Vielzahl von Blöcken (31) enthält, die durch Teilung in ihrer Längsrichtung in einer Umfangsrichtung ausgebildet werden und in Ringform um einen Außenumfang der Heizeinrichtung (4) angeordnet sind;
die Hydrodesulfurierungs-Einrichtung (3) so ausgeführt ist, dass sich das Rohmaterial, das den Innenraum jedes der Blöcke (31) durchlaufen hat, zu seinem benachbarten Block (31) bewegt; und
die Hydrodesulfurierungs-Einrichtung (3) so ausgeführt ist, dass benachbarte Blöcke (31) miteinander in Verbindung stehen und das Rohmaterial in entgegengesetzten Richtungen in die benachbarten Blöcke (31) strömt.

2. Hydrodesulfurierungs-Vorrichtung nach Anspruch 1, wobei Endabschnitte der benachbarten Blöcke (31) in einer axialen Richtung der Hydrodesulfurierungs-Einrichtung (3) in Verbindung miteinander stehen und die anderen Endabschnitte der benachbarten Blöcke (31) in der axialen Richtung der Hydrodesulfurierungs-Einrichtung (3) daran gehindert werden, miteinander in Verbindung zu treten.

3. Hydrodesulfurierungs-Vorrichtung nach Anspruch 2, wobei die Hydrodesulfurierungs-Einrichtung (3) die Blöcke (31) in einer geraden Anzahl enthält.

4. Hydrodesulfurierungs-Vorrichtung nach Anspruch 3, wobei ein Einlass und ein Auslass der Hydrodesulfurierungs-Einrichtung (3) jeweils an Endflächen von Endabschnitten benachbarter Blöcke (31) vorhanden sind und die Endabschnitte daran gehindert werden, mit den benachbarten Blöcken (31) in Verbindung zu treten, und der Einlass und der Auslass sich jeweils an einer Seite der Endflächen befinden, wobei die eine Seite an Positionen liegt, an denen die mit dem Einlass und dem Auslass versehenen Blöcke in der Umfangsrichtung benachbart zueinander sind.

5. Hydrodesulfurierungs-Vorrichtung nach einem der Ansprüche 1 bis 4, wobei die Hydrodesulfurierungs-Einrichtung (3) so ausgeführt ist, dass das Rohmaterial, das den Innenraum jedes der Blöcke (31) durchlaufen hat, sich zu seinem benachbarten Block an einem Endabschnitt in der axialen Richtung der Hydrodesulfurierungs-Einrichtung (3) bewegt, und der Endabschnitt einen Raum einschließt, in den kein Hydrodesulfurierungs-Mittel eingefüllt wird.

6. Hydrodesulfurierungs-Vorrichtung nach Anspruch 5, wobei der Endabschnitt jedes der Blöcke (31) ein Katalysator-Aufnahmeelement enthält, das das Hydrodesulfurierungs-Mittel aufnimmt und Gas-Durchlasslöcher sowie das an dem Katalysator-Aufnahmeelement vorhandene Hydrodesulfurierungs-Mittel enthält, und der Raum zwischen einer Endplatte in der axialen Richtung und dem Katalysator-Aufnahmeelement ausgebildet ist.

7. Hydrodesulfurierungs-Vorrichtung nach Anspruch 5 oder 6, wobei Räume der benachbarten Blöcke (31) miteinander über Verbindungslöcher in Verbindung stehen, deren Querschnittsfläche kleiner ist als die des Raums.

8. Wasserstofferzeugungs-Vorrichtung, die umfasst:
die Hydrodesulfurierungs-Vorrichtung nach einem der Ansprüche 1 bis 7; und
einen Reformer (5), der so ausgeführt ist, dass er unter Verwendung des Rohmaterials, das die Hydrodesulfurierungs-Einrichtung (3) durchlaufen hat, ein wasserstoffhaltiges Gas erzeugt.

9. Wasserstofferzeugungs-Vorrichtung nach Anspruch 8, wobei die Heizeinrichtung (4) der Reformer (5) ist.

10. Brennstoffzellen-System, das umfasst:
die Wasserstofferzeugungs-Vorrichtung nach Anspruch 8 oder 9; und
eine Brennstoffzelle (8), die so ausgeführt ist, dass sie elektrische Energie unter Verwendung des von der Wasserstofferzeugungs-Vorrichtung zugeführten wasserstoffhaltigen Gases erzeugt.

## Revendications

1. Dispositif d'hydrodésulfuration comprenant :
un module d'hydrodésulfuration (3) conçu pour éliminer un constituant soufré d'une matière première ;
et
un chauffage (4) conçu pour chauffer le module d'hydrodésulfuration (3) ;
où le module d'hydrodésulfuration (3) inclut une pluralité de blocs (31), formée par division suivant le sens de sa longueur dans une direction circonférentielle, et disposée en cercle autour d'une périphérie extérieure du chauffage (4) ;
où le module d'hydrodésulfuration (3) est conçu de sorte que la matière première ayant traversé l'intérieur de chacun des blocs (31) se déplace vers le bloc adjacent (31) ; et
où le module d'hydrodésulfuration (3) est conçu de sorte que des blocs adjacents (31) soient en communication l'un avec l'autre et que la matière première circule dans les blocs adjacents (31) dans des directions opposées.

2. Dispositif d'hydrodésulfuration selon la revendication 1, dans lequel des parties d'une extrémité des blocs adjacents (31) dans une direction axiale du module de désulfuration (3) sont en communication l'une avec l'autre, et des parties d'une autre extrémité des blocs adjacents (31) dans la direction axiale du module de désulfuration (3) sont empêchées de communiquer l'une avec l'autre.

3. Dispositif d'hydrodésulfuration selon la revendication 2, dans lequel le module d'hydrodésulfuration (3) inclut les blocs (31) en nombre pair.

4. Dispositif d'hydrodésulfuration selon la revendication 3, dans lequel une entrée et une sortie du module de désulfuration (3) sont situées au niveau de surfaces d'extrémité respectives de parties d'extrémité de blocs adjacents (31), les parties d'extrémité étant empêchées de communiquer avec les blocs adjacents (31), l'entrée et la sortie étant situées sur chaque côté individuel des surfaces d'extrémité, le côté individuel étant à des endroits au niveau desquels les blocs pourvus de l'entrée et de la sortie sont adjacents l'un à l'autre dans la direction circonférentielle.

5. Dispositif d'hydrodésulfuration selon l'une quelconque des revendications 1 à 4, dans lequel le module de désulfuration (3) est conçu de sorte que la matière première ayant traversé l'intérieur de chacun des blocs (31) se déplace vers son bloc adjacent dans une partie d'extrémité dans la direction axiale du module d'hydrodésulfuration (3), et la partie d'extrémité inclut un espace qui n'est pas rempli d'un agent d'hydrodésulfuration.

6. Dispositif d'hydrodésulfuration selon la revendication 5, dans lequel la partie d'extrémité de chacun des blocs (31) inclut un élément de rétention de catalyseur retenant l'agent d'hydrodésulfuration et incluant des orifices de passage de gaz et l'agent d'hydrodésulfuration situé sur l'élément de rétention de catalyseur, et l'espace est formé entre une plaque d'extrémité dans la direction axiale et l'élément de rétention de catalyseur.

7. Dispositif d'hydrodésulfuration selon la revendication 5 ou 6, dans lequel des espaces des blocs adjacents (31) sont en communication l'un avec l'autre par le biais de trous communicants ayant une aire de section transversale inférieure à l'espace.

8. Générateur d'hydrogène comprenant :
le module d'hydrodésulfuration selon l'une quelconque des revendications 1 à 7 ; et
un module de reformage (5) conçu pour générer un gaz contenant de l'hydrogène en utilisant la matière première qui est passée par le module d'hydrodésulfuration (3).

9. Générateur d'hydrogène selon la revendication 8, dans lequel le chauffage (4) est le module de reformage (5).

10. Système de pile à combustible comprenant :
le générateur d'hydrogène selon la revendication 8 ou 9 ; et
une pile à combustible (8) conçue pour générer de la puissance électrique en utilisant le gaz contenant de l'hydrogène fourni par le générateur d'hydrogène.
